# EUROPEAN PATENT APPLICATION

(11) **EP 1 847 913 A1**
(43) Date of publication of application: **24.10.2007**
(21) Application number: 07105584.2
(22) Date of filing: 03.04.2007
(51) Int. Cl.: G06F 3/033

(54) **Multifunction activation methods and related devices**

(30) Priority: 20.04.2006 CN 200610075471
(71) Applicant: High Tech Computer Corp. (HTC), Taoyuan (TW)
(72) Inventor: Chen, Hsi-Kun, Taoyuan (TW); Wang, Yi-Shen, Taoyuan (TW); Wang, John C., Taoyuan (TW)
(74) Representative: Kewitz, Ansgar

(57) **Abstract**

Multifunction activation methods. A touch-sensitive mechanism comprising a first zone and a second zone is provided. The first zone has a first input definition. Upon contact with the second zone, maintained contact with the touch-sensitive mechanism and movement from the second zone to the first zone, a function is activated. If the contact moves within the first zone, the function is executed according to the first input definition.

## Description

### BACKGROUND OF THE INVENTION

### Field of the Invention

The disclosure relates generally to multifunction activation methods, and, more particularly to methods and related devices that activate multiple functions via a touch-sensitive mechanism.

### Description of the Related Art

When portable devices, particularly handheld devices such as PDAs, smart phones, or mobile phones first emerged on the market, most units were simple to operate, had relatively few controls, and were used primarily for making phone calls.

Recently, handheld devices have become more and more advanced, with built-in cameras, global positioning devices, Internet access capability, and various other features. Many manufacturers have responded to the increased functionality by placing a number of navigational and input tools, such as scroll wheels, touch pads, and/or hotkeys, onto handheld devices.

However, these components are often not placed together on a handheld device. For example, a touch pad might be placed on one area such as the front of the handheld device, a scroll wheel on another such as the side of the handheld device, and hotkeys clustered on yet another area such as around the number keys. This scattered layout takes up a lot of space on the device and often requires complex operation of multiple items to complete simple and complex tasks alike. The process is discontinuous, tiresome, and inconvenient.

### BRIEF SUMMARY OF THE INVENTION

Multifunction activation methods and related devices are provided.

In an embodiment of a multifunction activation method, a touch-sensitive mechanism comprising a first zone and a second zone is provided. Upon contact with the second zone, and when contact moves from the second zone to the first zone, a first function is activated.

In an embodiment of a multifunction activation method, a touch-sensitive mechanism comprising a first zone and a second zone is provided. Upon contact with the first zone and contact moves within the first zone, a first function is activated. Upon contact with the second zone, when contact is maintained with the touch-sensitive mechanism and moves from the second zone to the first zone, a second function is activated.

In an embodiment of a multifunction activation method, a touch-sensitive mechanism comprising a first zone and a second zone is provided. The first zone has a first input definition. Upon contact with the second zone, when contact is maintained with the touch-sensitive mechanism and moves from the second zone to the first zone, a function is activated. If the contact moves within the first zone, the function is operated according to the first input definition.

In an embodiment of a multifunction activation method, a touch-sensitive mechanism comprising a first zone, a second zone, and a third zone is provided. Upon contact with the second zone, when contact is maintained with the touch-sensitive mechanism and moves from the second zone to the first zone, a first function is activated. Upon contact with the third zone, when contact is maintained with the touch-sensitive mechanism and moves from the third zone to the first zone, a second function is activated.

In an embodiment of a multifunction activation method, a touch-sensitive mechanism comprising a first zone, a second zone, and a third zone is provided. Upon contact with the third zone, when contact is maintained with the touch-sensitive mechanism and moves from the second zone and passes through the second zone to the first zone, a first function is activated.

In an embodiment of a multifunction activation method, a touch-sensitive mechanism comprising a plurality of zones is provided. Upon contact with the zones of the touch-sensitive mechanism, a specific function is retrieved and activated according to a combination of the contacted zones.

Multifunction activation methods may take the form of program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of a portable devoice with a touch-sensitive mechanism;

Figs. 2A, 2B and 2C are schematic diagrams illustrating embodiments of touch-sensitive mechanisms comprising a plurality of zones;

Fig. 3 is a schematic diagram illustrating an embodiment of a touch-sensitive mechanism having a multi-dimension sensor;

Fig. 4 is a schematic diagram illustrating another embodiment of a touch-sensitive mechanism having a multi-dimensional sensor;

Fig. 5 is a flowchart of an embodiment of a multifunction activation method;

Figs. 6A, 6B and 6C show an example of an embodiment of multifunction activation; and

Fig. 7 is a flowchart of an embodiment of a multifunction activation method.

### DETAILED DESCRIPTION OF THE INVENTION

Multifunction activation methods and related devices are provided.

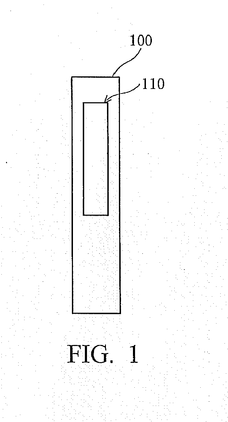

Fig. 1 is a schematic diagram illustrating an embodiment of a portable devoice with a touch-sensitive mechanism.

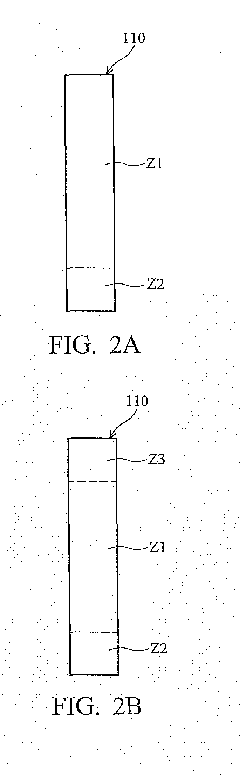

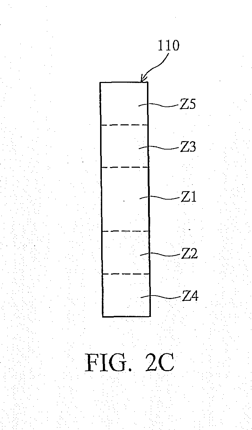

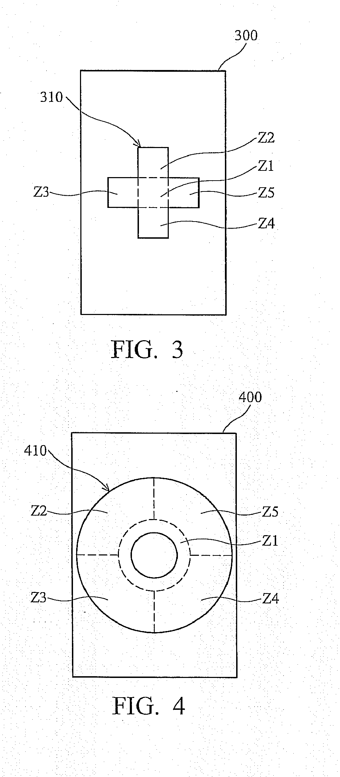

The portable device 100 may be a handheld device such as PDA, smart phone, global positioning device or mobile phone. The portable device 100 comprises a touch-sensitive mechanism 110 disposed on the side thereof. The touch-sensitive mechanism 110 has an elongated touch-sensitive surface, and a plurality of zones is physically or logically disposed on the elongated touch-sensitive surface. Figs. 2A, 2B and 2C are schematic diagrams illustrating embodiments of touch-sensitive mechanisms comprising a plurality of zones. In Fig. 2A, the surface of the touch-sensitive mechanism 110 comprises zones Z1 and Z2. In Fig. 2B, the touch-sensitive mechanism 110 comprises zones Z1, Z2 and Z3. In Fig. 2C, the touch-sensitive mechanism 110 comprises zones Z1, Z2, Z3, Z4 and Z5. It is understood that the invention is not limited thereto, and any number of zones can be applied in the invention. Further, in this embodiment, the touch-sensitive mechanism 110 has a one-dimensional sensor, but is not limited thereto. The touch-sensitive mechanism may have a multi-dimensional sensor. That is, any arrangement of zones on the touch-sensitive mechanism can be applied in the invention. For example, the portable device 300 in Fig. 3 comprises a touch-sensitive mechanism with zones Z1~Z5, and the portable device 400 in Fig. 4 also comprises a touch-sensitive mechanism with zones Z1~Z5 in different arrangements.

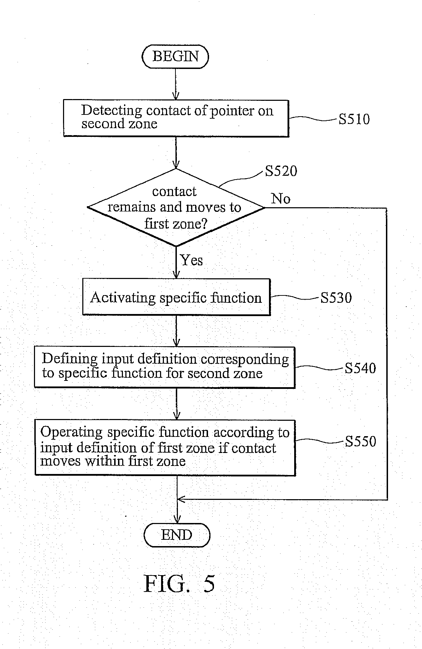

Fig. 5 is a flowchart of an embodiment of a multifunction activation method for use in a portable device comprising a touch-sensitive mechanism, such as a handheld device comprising PDA, smart phone, global positioning device, or mobile phone. The touch-sensitive mechanism comprises at least a first zone and a second zone. When contact by a pointer such as a finger or stylus contacts the first zone, and moves within the first zone, a default function is activated.

In step S510, contact of a pointer on the second zone of the touch-sensitive mechanism is detected. In step S520, it is determined whether the contact still contacts the touch-sensitive mechanism and moves to the first zone. If not (No in step S520), the procedure is complete. If so (Yes in step S520), in step S530, a specific function is activated. After the specific function is activated, in step S540, an input definition corresponding to the specific function is defined for the second zone. If the contact moves within the first zone, in step S550, the specific function is operated according to an input definition of the first zone.

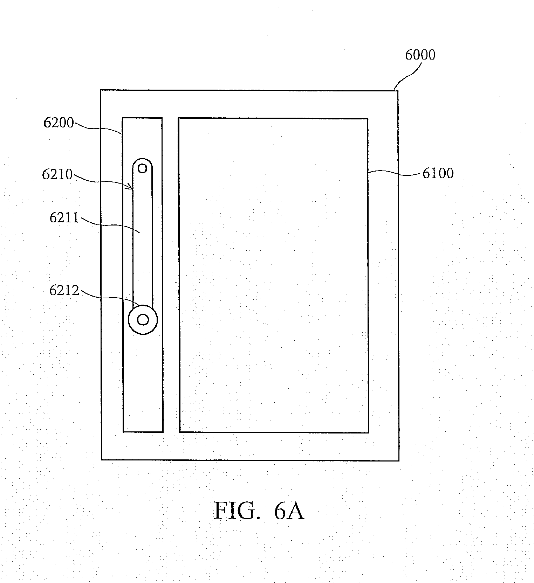

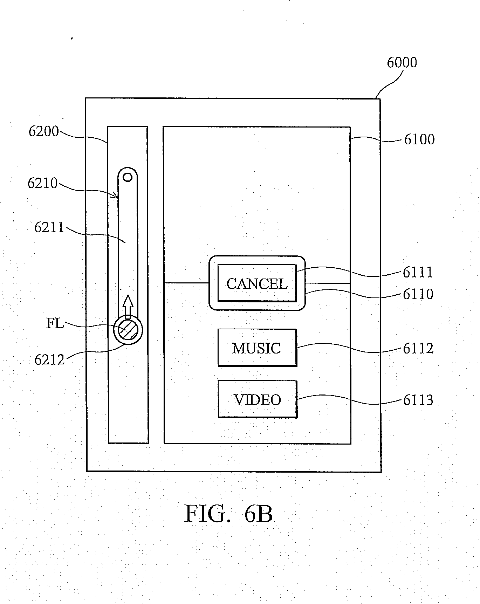

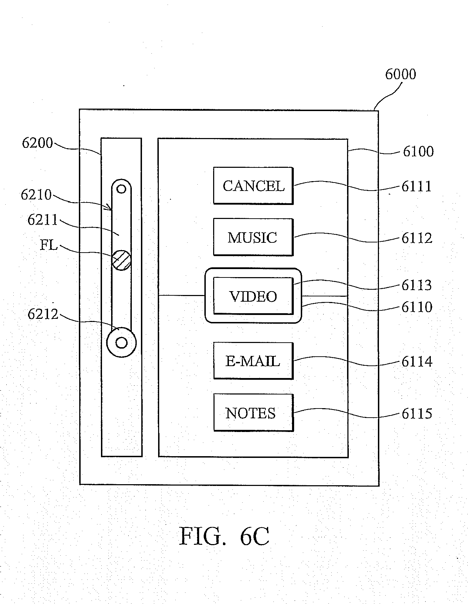

Figs. 6A, 6B and 6C show an example of an embodiment of multifunction activation. Fig. 6A shows a display unit 6000 of a portable device. The display unit 6000 comprises an item area 6100 and an area 6200. The item area 6100 displays pages or menus corresponding to various functions. The area 6200 displays a schematic diagram of the touch-sensitive mechanism 6210, with contact position on the touch-sensitive mechanism marked in the schematic diagram. Note that the touch-sensitive mechanism 6210 comprises zones 6211 and 6212.

Upon contact with zone 6211 of the touch-sensitive mechanism 6210, and movement thereof within zone 6211, a scroll bar function for the zone is activated. Upon contact with zone 6212 of the touch-sensitive mechanism 6210, and movement thereof to zone 6211, a hotkey function is activated, and a hotkey menu is displayed in the item area 6100, as shown in Fig. 6B. It is understood that upon contact with zone 6212 of the touch-sensitive mechanism 6210, contact position FL is marked in the area 6200. After the hotkey function is activated, a virtual button area 6110 is displayed at the center of the item area6100. The hotkey list displayed in the item area 6100 comprises hotkey items "CANCEL" 6111, "MUSIC" 6112, "VIDEO" 6113, "E-MAIL" 6114, and "NOTES" 6115. Since contact moves to zone 6211, contact moves up the touch-sensitive surface. As contact moves up the mechanism, list items are moved through the virtual button area 6110, such that hotkey "VIDEO" 6113 stays in the virtual button area 6110, as shown in Fig. 6C. In some embodiments, if contact is terminated with the touch-sensitive mechanism 6210, hotkey "VIDEO" 6113 is selected and launched. It is understood that, as described, after the specific function is activated, input definition corresponding to the specific function can be defined for the second zone. In some embodiments, after the hotkey function is activated, the input definition for the zone 6212 can be a return function. Upon contact with zone 6212, the hotkey function is inactivated and exited.

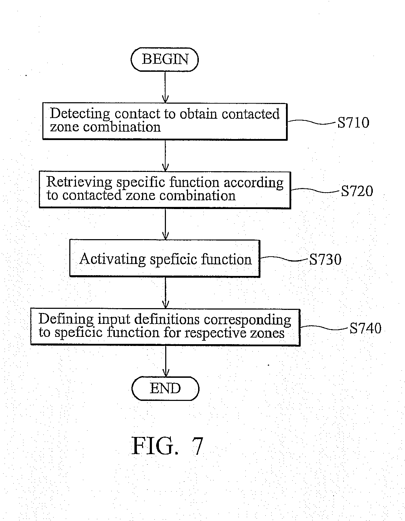

Fig. 7 is a flowchart of an embodiment of a multifunction activation method for use in a portable device comprising a touch-sensitive mechanism, such as a handheld device comprising PDA, smart phone, global positioning device, or mobile phone. The touch-sensitive mechanism comprises a plurality of zones. In step S710, contact by such as finger or stylus on the zone of the touch-sensitive mechanism is detected to generate a combination of the contacted zones. It is understood that, in some embodiments, if the contact stays at a zone for a predetermined period, it is determined the contact will not further move to another zone, thus finishing the contact zone combination. In step S720, a specific function is retrieved from a mapping table according to the contact zone combination, and in step S730, the specific function is activated. Additionally, in step S740, input definitions corresponding to the specific function are defined for respective zones.

Examples follow. A mapping table is provided in a portable device, as shown in Table 1.

**Table 1**

| Contact zone combination | Specific function |
|---|---|
| Z2→Z1 | F1 |
| 23→Z1 | F2 |
| Z4→Z2→Z1 | F3 |
| Z5→Z3→Z1 | F4 |

In an example, the touch-sensitive mechanism comprises three zones, as shown in Fig. 2B. If contact is made with zone Z2 and moves to zone Z1, a contact zone combination "Z2→Z1" is obtained. A specific function "F1" is retrieved and activated from the mapping table according to the contact zone combination "Z2→Z1". Similarly, if contact is made with zone Z3 and moves to zone Z1, a contact zone combination "Z3→Z1" is obtained. A specific function "F2" is retrieved and activated from the mapping table according to the contact zone combination "Z3→Z1".

In another example, the touch-sensitive mechanism comprises five zones, as shown in Fig. 2C. If contact is made with zone Z4, and moves and passes through zone Z2 to zone Z1, a contact zone combination "Z4→Z2→Z1" is obtained. A specific function "F3" is retrieved and activated from the mapping table according to the contact zone combination "Z4→Z2→Z1". Similarly, if contact is made with zone Z5, and moves and passes through zone Z3 to zone Z1, a contact zone combination "Z5→Z3→Z1" is obtained. A specific function "F4" is retrieved and activated from the mapping table according to the contact zone combination "Z5→Z3→Z1".

Multifunction activation methods, or certain aspects or portions thereof, may take the form of program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A multifunction activation method, comprising:
providing a touch-sensitive mechanism comprising a first zone and a second zone, wherein upon contact with the first zone and movement thereof within the first zone, a first function is activated;
detecting contact with the second zone;
determining whether the contact still contacts the touch-sensitive mechanism; and
if so, and the contact moves from the second zone to the first zone, a second function is activated.

2. A multifunction activation method, comprising:
providing a touch-sensitive mechanism comprising a first zone and a second zone, where the first zone has a first input definition;
detecting contact with the second zone;
determining whether the contact still contacts the touch-sensitive mechanism;
if so, and the contact moves from the second zone to the first zone, activating a function; and
operating the function according to the first input definition if the contact moves within the first zone.

3. A multifunction activation method, comprising:
providing a touch-sensitive mechanism comprising a first zone, a second zone, and a third zone;
detecting contact with the second zone;
if the contact still contacts the touch-sensitive mechanism and moves from the second zone to the first zone, activating a first function;
detecting a contact of the contact on the third zone;
if the contact still contacts the touch-sensitive mechanism and moves from the third zone to the first zone, activating a second function.

4. A multifunction activation method, comprising:
providing a touch-sensitive mechanism comprising a first zone, a second zone, and a third zone;
detecting contact with the third zone;
determining whether the contact still contacts the touch-sensitive mechanism; and
if so, and the contact moves from the second zone and passes through the second zone to the first zone, a first function is activated.

5. The method of claim 4 further comprising:
detecting contact with the second zone; and
if the contact still contacts the touch-sensitive mechanism, and moves from the second zone to the first zone, activating a second function.

6. A device, comprising:
a touch-sensitive mechanism comprising a first zone and a second zone,
wherein upon contact with the first zone, and movement thereof within the first zone, a first function is activated, and upon contact with the second zone and continuous contact with the touch-sensitive mechanism and movement from the second zone to the first zone, a second function is activated.

7. A device, comprising:
a touch-sensitive mechanism comprising a first zone and a second zone, where the first zone has a first input definition,
wherein upon contact with the second zone, maintained contact with the touch-sensitive mechanism and movement from the second zone to the first zone, a function is activated, and the function is operated according to the first input definition if the contact moves within the first zone.

8. A device, comprising:
a touch-sensitive mechanism comprising a first zone, a second zone, and a third zone,
wherein upon contact with the second zone, maintained contact with the touch-sensitive mechanism and movement from the second zone to the first zone, a first function is activated, and upon contact with the third zone, maintained contact with the touch-sensitive mechanism and movement from the third zone to the first zone, a second function is activated.

9. A device, comprising:
a touch-sensitive mechanism comprising a first zone, a second zone, and a third zone,
wherein upon contact with the third zone, maintained contact with the touch-sensitive mechanism and movement from the second zone and passes through the second zone to the first zone, a first function is activated.

10. A device, comprising:
a touch-sensitive mechanism comprising a first zone and a second zone, wherein the first zone and the second zone are logically or physically divided,
wherein upon contact with the second zone, and movement from the second zone to the first zone, a first function is activated.

11. A multifunction activation method, comprising:
providing a touch-sensitive mechanism comprising a plurality of zones;
detecting contact with the zones of the touch-sensitive mechanism to obtain a combination of contacted zones; and
activating a specific function according to the contacted zone combination.

12. A device, comprising:
a touch-sensitive mechanism comprising a plurality of zones, wherein the zones are logically or physically divided on the touch-sensitive mechanism,
wherein upon contact with the zones, a specific function is activated according to a combination of the contacted zones.
